# EUROPÄISCHE PATENTANMELDUNG

(11) **EP 0 718 567 A1**
(43) Veröffentlichungstag der Anmeldung: **26.06.1996**
(21) Anmeldenummer: 95114418.7
(22) Anmeldetag: 14.09.1995
(51) Int. Cl.: F24H 3/04

(54) **Heissluftpistole**

(30) Priorität: 23.12.1994 DE 4446188
(71) Anmelder: Metabowerke GmbH & Co., D-72622 Nürtingen (DE)
(72) Erfinder: Schnizler, Albrecht, D-72622 Nürtingen (DE); Kieser, Hermann, Ing. (grad.), D-72622 Nürtingen (DE)
(74) Vertreter: Steimle, Josef, Dipl.-Ing.

(57) **Zusammenfassung**

Gegenstand der Erfindung ist eine Heißluftpistole mit einem in einem Gehäuse (10) angeordneten Gebläse (12) zur Erzeugung eines Luftstromes, mit einem zumindest einen Teil des Luftstromes aufnehmenden Hauptluftkanal (30) und mindestens einem Nebenluftkanal (34), wobei der Strömungsquerschnitt des Nebenluftkanales (34) mittels einer beweglich gelagerten Klappe (32) veränderbar ist, und mit Mitteln zum Erwärmen zumindest eines Teils des Luftstromes. Eine Heißluftpistole zu schaffen, mit der der zu bearbeitende Gegenstand in kürzester Zeit mit einem Kaltluftstrom beaufschlagt werden kann, ohne daß in der Heißluftpistole ein Wärmestau auftritt wird dadurch erreicht, daß der Nebenluftkanal (34) durch die beweglich gelagerte Klappe (32) verschließbar ist, wohingegen der Strömungsquerschnitt des Hauptluftkanales (30) unveränderbar ist, und daß die Mittel zum Erwärmen zumindest eines Teils des Luftstromes genau ein im Hauptluftkanal (30) integriertes Heizelement (36) aufweisen.

## Beschreibung

Die Erfindung betrifft eine Heißluftpistole mit einem in einem Gehäuse angeordneten Gebläse zur Erzeugung eines Luftstromes, mit einem zumindest einen Teil des Luftstromes aufnehmenden Hauptluftkanal und mindestens einem Nebenluftkanal, wobei der Strömungsquerschnitt des Nebenluftkanales mittels eines Verstellorgans veränderbar ist, und mit Mitteln zum Erwärmen zumindest eines Teils des Luftstromes, wobei der Nebenluftkanal durch das Verstellorgan verschließbar ist, wohingegen der Strömungsquerschnitt des Hauptluftkanales unveränderbar ist, und die Mittel zum Erwärmen zumindest eines Teils des Luftstromes ein im Hauptluftkanal integriertes Heizelement aufweisen und der Nebenluftkanal frei von Heizelementen ist.

Heißluftpistolen werden vorzugsweise als Haartrockner, Lackentferner, zum Schrumpfen von Kunststoffolien oder zum Biegen von Kunststoffrohren eingesetzt. Beispielsweise beim Biegen von Kunststoffrohren wird die zu biegende Stelle des Kunststoffrohres solange einem aus der Heißluftpistole kommenden Warmluftstrom ausgesetzt, bis der Kunststoff erweicht und einfach zu verformen ist. Dann wird das Kunststoffrohr in die gewünschte Form gebogen und muß solange in dieser Position gehalten werden, bis sich der Kunststoff abgekühlt hat und wieder formstabil ist.

Um den Vorgang des Abkühlens zu beschleunigen sind bereits Heißluftpistolen vorgeschlagen worden, die auch einen Kaltluftstrom zur Verfügung stellen können.

Ein Haartrockner der Eingangs genannten Art ist aus der EP-A-400 381 bekannt. Hierbei handelt es sich um eine Vorrichtung mit zwei nebeneinander angeordneten Luftkanälen, auf die je eine Auströmdüse aufgesetzt werden kann. In jedem Luftkanal ist eine Heizspirale angeordnet, die den Luftstrom aufwärmen kann. Jede dieser Heizspiralen ist einzeln ein- und ausschaltbar, so daß es mit dieser Vorrichtung möglich ist, gleichzeitig einen Warmluft- und einen Kaltluftstrom zur Verfügung zu stellen.

Um einen Rohrabschnitt eines zu biegenden Kunststoffrohres möglichst schnell zu erwärmen werden beide Heizspiralen eingeschaltet. Damit kann dem Rohrabschnitt eine größtmögliche Wärmemenge in kurzer Zeit zugeführt werden. Soll nun nach dem Erhitzen und Biegen des Kunststoffrohres die Biegestelle mit kalter Luft abgekühlt werden, um den gebogenen Zustand zu erhalten, so müssen hierzu die Heizspiralen abgeschaltet werden. Allerdings dauert es eine gewisse Zeit bis sich die Heizspiralen und die Luftkanäle abgekühlt haben, so daß zunächst weiterhin Warmluft aus der Heißluftpistole ausströmt, die sich erst allmählich abkühlt. Somit steht erst nach einer gewissen Zeit der gewünschte Kaltluftstrom zur Verfügung.

In der EP-A-400 381 wird außerdem vorgeschlagen, die Vorrichtung so zu betreiben, daß ein Luftkanal Warmluft und der andere Luftkanal Kaltluft fördert. Bei einem derartigen Einsatz der Heißluftpistole würde es ausreichen diese ein wenig zu verschwenken, um den zu bearbeitenden Rohrabschnitt mit einem Kaltluftstrom zu beaufschlagen. Nachteilig ist hierbei, daß in diesem Falle nicht die gesamte Heizkapazität und Luftmenge zur Verfügung steht und der Aufwärmvorgang des zu biegenden Rohrabschnittes unnötig viel Zeit beansprucht.

Weiterhin wird in der EP-A-400 381 vorgeschlagen, die Luftkanäle innenseitig mit bewegbaren Prall- bzw. Leitblechen zu versehen, um den Strömungsquerschnitt individuell zu regulieren. Hierbei kann es einerseits vorkommen, daß der Luftmassenstrom des Warmluftstromes so stark erhöht wird, daß die Heizspirale nicht mehr in der Lage ist, den Warmluftstrom auf die erforderliche Temperatur aufzuheizen und andererseits kann es vorkommen, daß der Luftmassenstrom des Warmluftstromes so gering wird, daß die an der Heizspirale bereit gestellte Wärme nicht abtransportiert werden kann und es zu einem Wärmestau kommt, der die Heizspirale- und/oder die Heißluftpistole beschädigt. Ein vollständiges Verschließen eines Luftkanals ist aber nicht möglich.

Aus der DE-C-29 00 983 ist eine Heißluftdusche mit einem eine Heizspirale aufweisenden Warmluftkanal und einem Kaltluftkanal bekannt. Durch eine schwenkbar gelagerte Klappe kann der ankommende Luftstrom wahlweise entweder durch den Warmluftkanal oder den Kaltluftkanal gelenkt werden, bevor der Luftstrom durch die gemeinsame Düse ins Freie tritt. Im Warmluftkanal ist eine Heizspirale zur Erwärmung des Luftstromes angeordnet. Im Warmluftkanal ist die Heizspirale integriert ist, so daß der Gesamtquerschnitt des Warmluftkanales größer ist als der des Kaltluftkaanales. Damit wird gewährleistet, daß beide Kanäle denselben Strömungsquerschnitt aufweisen. Um eine temperaturbedingte Beschädigung des Gehäuses zu vermeiden, ist die Innenfläche des Warmluftkanals mit einer Asbestschicht isoliert, was einerseits für die Gesundheit nicht förderlich ist, andererseits lediglich für niedere Temperaturbereiche wirksam ist und im Falle einer Heißluftdusche bzw. eines Haartrockners ausreicht.

Die Klappe ist so ausgelegt, daß sie entweder den Warmluftkanal oder den Kaltluftkanal vollständig verschließt. Beim Umlegen der Klappe in die jeweils andere Position wird durch das mit der Klappe zusammenwirkende Betätigungselement gleichzeitig ein Schalter des Heizdrahtes bedient. Hierdurch wird gewährleistet, daß die Heizspirale ausgeschaltet ist, wenn der Warmluftkanal verschlossen ist.

Mit einer Heißluftdusche gemäß der DE-C-29 00 983 ist es zwar möglich den Warmluftstrom in kürzester Zeit in einen Kaltluftstrom umzuwandeln, jedoch kann es im Warmluftkanal zu einem die Heizspirale und/oder die gesamte Heißluftdusche beschädigenden Wärmestau kommen, denn nach dem Abschalten des Heizdrahtes glüht dieser eine gewisse Zeit nach. Die durch das Nachglühen entstande Wärme kann aber nicht mehr abtransportiert werden, denn der Warmluftkanal ist mittlerweile verschlossen. Die sich so aufstauende Restwärme der Heizspirale kann die Heizspirale und/oder die Heißluftdusche beschädigen.

Aus der EP-A-463 315 ist ein Haartrockner mit einem einzigen Luftkanal bekannt, bei dem ein Betriebsparameter durch ein Potentiometer stufenlos verstellbar ist. Hierdurch wird gewährleistet, daß der Bediener des Haartrockners die für ihn geeignete Temperatur stufenlos einstellen kann.

Allerdings dauert es hier ebenfalls eine geraume Zeit, bis der Haartrockner von seiner eingestellten, vorzugsweise hohen Arbeitstemperatur auf die für den Kaltluftstrom gewünschte niedrige Arbeitstemperatur umgestellt ist.

Aus der CH 669 319 ist ein Haartrockner bekannt geworden, der einen Hauptluftkanal für Warmluft und einen Nebenluftkanal für Kaltluft aufweist. Diese Vorrichtung ist jedoch nur zum Trocknen von Haaren geeignet und es können keine Luftströme mit hohen Temperaturen, was bei Verschweißen von Kunststoff erforderlich ist, erzeugt werden.

Davon ausgehend liegt der Erfindung die Aufgabe zugrunde, eine Heißluftpistole zu schaffen, mit der Luftströme mit hohen Temperaturen problemlos erzeugt werden können und der zu bearbeitende Gegenstand in kürzester Zeit mit einem Kaltluftstrom beaufschlagt werden kann, ohne daß in der Heißluftpistole ein Wärmestau auftritt.

Diese Aufgabe wird erfindungsgemäß dadurch gelöst, daß die eingangs genannte Heißluftpistole dahingehend weiter entwickelt wird, daß der Hauptluftkanal von einem Einsatz gebildet wird und sich unmittelbar an das Gebläse anschließt, und daß der Nebenluftkanal vom Gehäuse gebildet wird und vom Einsatz abgezweigt ist.

Eine nach dieser technischen Lehre ausgebildete Heißluftpistole hat den Vorteil, daß der durch den Nebenluftkanal strömende Kaltluftstrom je nach Anwendungsfall wahlweise unter Beibehaltung des Warmluftstromes zugeschaltet werden kann, so daß kein Wärmestau zu befürchten ist.

Dadurch, daß im Nebenluftkanal kein Heizelement vorgesehen ist, kann dieser sehr viel kleiner und platzsparender gebaut werden, so daß die Heißluftpistole kleiner und auch leichter wird. Außerdem kann die Luftströmung im Nebenluftkanal nunmehr sehr viel gleichmäßiger und nahezu wirbelfrei erfolgen.

Dadurch, daß der Hauptluftkanal von einem Einsatz gebildet wird, der sich unmittelbar an das Gebläse anschließt, wird die Möglichkeit geschaffen, diesen Einsatz so auszugestalten, daß der den Warmluftstrom so führt, daß der Warmluftstrom andere Teile des Heißluftgebläses nicht beschädigt. Auf diese Weise kann der Warmluftstrom auch sehr hohe Temperaturen besitzen. Um den Strömungsauslaß bzw. die Öffnung des Heißluftgebläses zu schützen, überragt der Einsatz das Gehäuse nach außen. Außerdem weist der Einsatz eine Ausströmdüse auf. Bei einem bevorzugten Ausführungsbeispiel besteht der Einsatz aus einem temperaturbeständigen Werkstoff, z.B. aus Metall oder einem hochtemperaturbeständigen Kunststoff. Um das Gehäuse von der Strahlungswärme des Einsatzes zu schützen, weist dieser einen Abstand zur Innenwand des Gehäuses auf. Dabei kann bevorzugt dieser Zwischenraum konvektiv oder zwangsbelüftet sein.

Bei einem weiteren Ausführungsbeispiel ist der Einsatz zwei- oder mehrteilig ausgebildet, wobei die einzelnen Teile aus unterschiedlichen Materialien bestehen können. Dabei kann der Einsatz ganz oder teilweise auswechselbar sein. Insbesondere ist es lediglich für den Bereich ab dem Heizelement erforderlich, den Einsatz aus einem temperaturbeständigen Material herzustellen. Der in Strömungsrichtung davor liegende Bereich kann aus einem herkömmlichen Material, z.B. dem Gehäusematerial bestehen.

Bevorzugt weist der dem Gehäuse benachbarte Teil einen Abzweig für den Nebenluftkanal auf. Dieser Teil kann als Kondensor bzw. sich konisch verjüngend ausgebildet sein, wodurch ein optimales Einströmen eines Teils des geförderten Luftstromes in den Nebenluftkanal ermöglicht wird.

In einer bevorzugten Ausführungsform ist das Verstellorgan mit einem vom Benutzer der Heißluftpistole erreichbaren Betätigungselement wirkverbunden. Dadurch wird erreicht, daß das Verstellorgan einfach und zuverlässig von außen betätigt werden kann, ohne daß der Bediener seinen Arbeitsvorgang unterbrechen muß. Bevorzugt ist das Verstellorgan eine verschwenkbare Klappe.

In einer weiteren, bevorzugten Ausführungsform der erfindungsgemäßen Heißpistole ist der Strömungsquerschnitt des Nebenluftkanales durch die Klappe in mehreren Stufen einstellbar ist, wobei die Klappe durch Verrastmittel feststellbar ist.

Dies hat den Vorteil, daß die Stärke des durch den Nebenluftkanal strömenden Kaltluftstromes bedienerfreundlich eingestellt werden kann. Das Verrasten der Klappe beispielsweise über Kugelraster oder dergleichen befreit den Benutzer von dem Zwang, die Klappe, bzw. das Betätigungselement während des gesamten Arbeitsvorganges festhalten zu müssen.

In einer weiteren Ausführungsform ist der Strömungsquerschnitt des Nebenluftkanales kleiner als der des Hauptluftkanales ausgebildet. Dadurch wird der untergeordnete Charakter des Nebenluftkanales verstärkt. Der Hauptluftkanal und/oder der Nebenluftkanal können als Diffusor und/oder als Düse ausgebildet sein.

In einer Ausführungsform der erfindungsgemäßen Heißluftpistole ist der Nebenluftkanal unterhalb des Hauptluftkanales angeordnet. Dies hat den Vorteil, daß die Heißluftpistole schmal bleibt und zum Wechseln des Luftstroms lediglich nach oben bzw. unten verschwenkt werden muß.

In einer weiteren, bevorzugten Ausführungsform der erfindungsgemäßen Heißluftpistole ist der Nebenluftkanal gegenüber dem Hauptluftkanal um etwa 15° bis 45 °, vorzugsweise 25°, geneigt angeordnet, so daß der Kaltluftstrom gegenüber dem Warmluftstrom um etwa 25° versetzt aus der Heißluftpistole heraustritt.

Dies hat den Vorteil, daß der Warmluftstrom deutlich vom Kaltluftstrom getrennt aus der Heißluftpistole austritt und so eine Vermischung der beiden Luftströme sicher verhindert wird. Dadurch, daß der Winkel kleiner als 45° ist, wird gewährleistet, daß der Benutzer durch leichtes Verschwenken der Heißluftpistole den jeweils anderen Luftstrom auf den zu bearbeitenden Gegenstand richten kann.

Den Nebenluftkanal im Normalzustand durch die Klappe zu verschließen hat den Vorteil, daß im Normalzustand der gesamte, zur Verfügung stehende Luftmassenstrom im Hauptluftkanal anliegt und bestimmungsgemäß eingesetzt werden kann. Zwar kann der Benutzer durch Variieren der Leistung des Gebläses und/oder des Heizelementes den Warmluftstrom seinen Wünschen entsprechend einstellen, aber durch Verschließen des Nebenluftkanales im Normalzustand ist gewährleistet, daß der Benutzer maximale Variationsmöglichkeiten hat.

In einer weiteren, bevorzugten Ausführungsform der Erfindung ist die Leistung des Gebläses und/oder des Heizelementes in einem vorbestimmten Leistungsbereich variierbar.

Das hat den Vorteil, daß der Betriebszustand der Heißluftpistole den jeweiligen Rahmenbedingungen angepaßt werden kann. So ist es beispielsweise möglich, die Temperatur des Warmluftstromes dadurch zu vergrößern, daß der Luftmassenstrom aufgrund geringerer Leistung des Gebläses gesenkt wird. Durch entsprechendes variieren entweder der Leistung des Heizelementes oder der Leistung des Gebläses oder der beiden gemeinsam kann ein Warmluftstrom mit jeder gewünschten Temperatur erzeugt werden.

Außerdem ist es möglich durch Öffnen der Klappe des Nebenluftkanales innerhalb kürzester Zeit über einen Kaltluftstrom zu verfügen. Da nach dem Öffnen der Klappe des Nebenluftkanales der Luftmassendurchfluß des Hauptluftkanales zwangsläufig sinkt, kann durch Anpassen der Leistung des Gebläses und/oder des Heizelementes ein Wärmestau sicher verhindert werden.

In einer bevorzugten Ausführungsform der erfindungsgemäßen Heißluftpistole wird die Leistung des Gebläses und/oder des Heizelementes durch das Betätigungselement der momentanen Stellung der Klappe angepaßt.

Eine derartige Koppelung der Betriebsparameter an die jeweilige Stellung der Klappe hat den Vorteil, daß ein Wärmestau jederzeit verhindert wird. Mit dem Öffnen der Klappe wird quasi automatisch die Leistung des Gebläses erhöht und/oder die Leistung des Heizelementes gesenkt, damit gewährleistet ist, daß das Heizelement nicht mehr Wärme bereitstellt als durch den Warmluftstrom aufgenommen werden kann.

In einer weiteren, bevorzugten Ausführungsform der erfindungsgemäßen Heißluftpistole ist das Betätigungselement derart mit dem Gebläse verbunden, daß das Betätigungselement beim Öffnen des Nebenluftkanales die Leistung des Gebläses erhöht und beim Schließen des Nebenluftkanales die Leistung des Gebläses senkt. Diese Wirkverbindung des Betätigungselementes mit dem Gebläse hat den Vorteil, daß die Leistung des Gebläses zwangsläufig, d.h. ohne Zutun des Benutzers, der momentanen Stellung der Klappe angepaßt wird, um einem Wärmestau im Hauptluftkanal sicher zu vermeiden.

In einer weiteren bevorzugten Ausführungsform der erfindungsgemäßen Heißluftpistole ist das Betätigungselement derart mit dem Heizelement verbunden, daß das Betätigungselement beim Öffnen des Nebenluftkanales die Leistung des Heizelementes um einen geringen Betrag senkt und beim Schließen des Nebenluftkanales die Leistung des Heizelementes um einen geringen Betrag erhöht.

Das Verringern der Heizielstung um einen geringen Betrag während des Betriebes des Nebenluftkanales hat den Vorteil, daß die reduzierte Leistung des Heizelementes im wesentlichen dem reduzierten Luftmassenstrom im Hauptluftkanal angepaßt wird, so daß ein Wärmestau verhindert wird. Die Leistung des Heizelementes nicht übermäßig zu reduzieren hat den Vorteil, daß die Temperatur des Warmluftstromes im wesentlichen konstant gehalten wird, so daß trotz des Öffnens des Nebenluftkanales weiterhin ein Warmluftstrom mit der gewünschten Temperatur zur Verfügung steht. Dadurch ist es möglich, durch Hin- und Herschwenken der Heißluftpistole den zu bearbeitenden Gegenstand abwechselnd einem Kalt- und einem Warmluftstrom auszusetzen.

Durch die beiden zuletzt genannten Merkmale des erfindungsgemäßen Heizelementes wird darüberhinaus gewährleistet, daß der Warmluftstrom in seinen Ausgangszustand zurückversetzt wird, sobald die Klappe den Nebenluftkanal wieder verschließt.

In einer anderen Ausführungsform der erfindungsgemäßen Heißluftpistole ist das Betätigungselement federbelastet. Dies hat den Vorteil, daß die mit dem Betätigungselement verbundene Klappe ohne Zutun des Benutzers quasi selbständig in den Normalzustand zurückversetzt wird, d. h. nachdem der Benutzer das Betätigungselement losläßt, wird der Nebenluftkanal quasi automatisch verschlossen.

Das Betätigungselement als einen Schieber mit einem abzugsartig ausgestalteten Griff auszuführen senkt die Herstellungskosten.

In einer modifizierten bevorzugten Ausführungsform ist der Schieber mit einer Arretiernase ausgestattet, die den Schieber in seinem ausgelenkten Zustand arretiert. Dies hat den Vorteil, daß die mit dem Schieber verbundene Klappe im geöffneten Zustand verharrt, auch wenn der Benutzer den Schieber losläßt.

In einer weiteren, besonders bevorzugten Ausführungsform ist das Betätigungselement mit einem mehrstufigen Gebläseschalter verbunden. Bei handelsüblichen Heißluftpistolen ist das Gebläse mit einem dreistufigen Gebläseschalter versehen, d. h., das Gebläse verfügt in seiner eingeschalteten Position über zwei verschiedene Leistungsstufen. Damit das Betätigungselement beim Öffnen oder Schließen der Klappe die Leistung des Gebläses anpassen kann, ist es zweckmäßig, das Betätigungselement mit dem Gebläseschalter zu verbinden.

Den Gebläseschalter mit einer Feder zu belasten hat den Vorteil, daß der Gebläseschalter selbständig in seine niedrigere Leistungsstufe zurückversetzt wird, sobald das Betätigungselement die Klappe verschließt.

In einer anderen, bevorzugten Ausführungsform der erfindungsgemäßen Heißluftpistole ist das Betätigungselement mit Schaltkontakten ausgerüstet, über die die Leistung des Heizelementes steuerbar ist.

Dies hat den Vorteil, daß das Betätigungselement gleichzeitig mit dem Öffnen oder Schließen der Klappe die Leistung des Heizelementes der Stellung der Klappe anpassen kann.

Weitere Vorteile ergeben sich aus der Beschreibung und der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Die Erfindung ist in der Zeichnung dargestellt und wird anhand eines Ausführungsbeispieles näher erläutert. Es zeigen:
- Figur 1: eine geschnitten dargestellte Seitenansicht einer erfindungsgemäßen Heißluftpistole mit geschlossenem Nebenluftkanal; und
- Figur 2: einen Ausschnitt der Heißluftpistole gemäß Figur 1, jedoch mit geöffnetem Nebenluftkanal.

Die einzelnen Figuren der Zeichnung zeigen den erfindungsgemäßen Gegenstand teilweise stark schematisiert und sind nicht maßstäblich zu verstehen. Die Gegenstände der einzelnen Figuren sind teilweise stark überproportional vergrößert dargestellt, damit ihr Aufbau besser gezeigt werden kann.

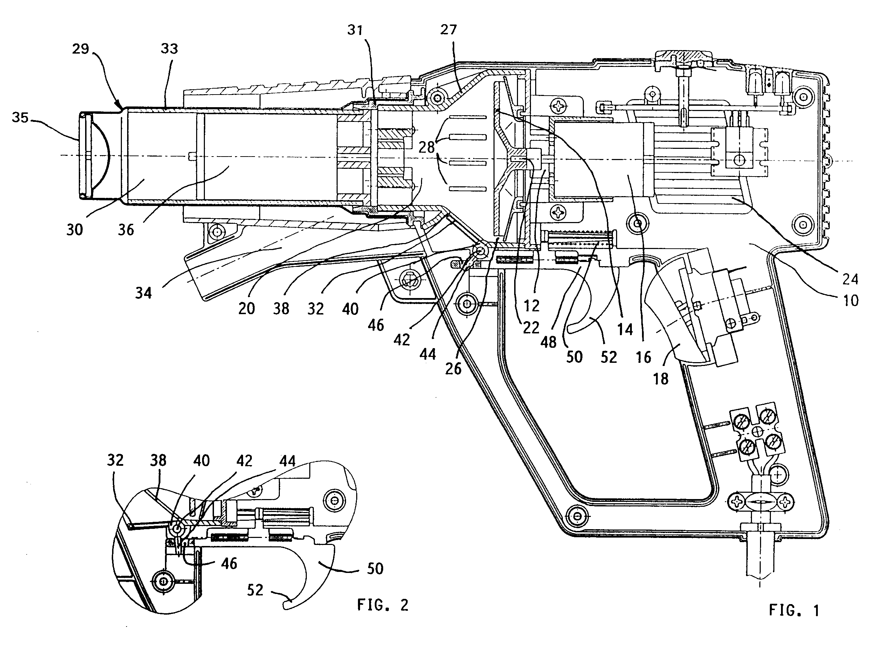

Figur 1 zeigt eine geschnittene Darstellung einer erfindungsgemäßen Heißluftpistole mit einem Gehäuse 10 und einem in dem Gehäuse 10 angeordneten Gebläse 12. Das Gebläse 12 umfasst ein Gebläserad 14 und einem Gebläsemotor 16, der über einen Gebläseschalter 18 bedient wird. Der Gebläseschalter 18 ist mehrstufig und verfügt neben der "Aus"-Stellung noch über eine "Langsam" und eine "Schnell"-Stellung.

Das Gebläserad 14 ist in einem Luftkanal 20 drehbar angeordnet und über eine Welle 22 mit dem Gebläsemotor verbunden.

Durch Lufteinlaßschlitze 24 im Gehäuse 10 saugt das Gebläserad 14 Umgebungsluft an, die am Gebläsemotor 16 entlangströmt und durch das Gebläserad 14 in einen Ringspalt 26 gefördert wird. Der so erzeugte Luftstrom gelangt an Leitblechen 28 vorbei in einen Hauptluftkanal 30, falls eine Klappe 32 einen unter dem Hauptluftkanal 30 angeordneten Nebenluftkanal 34 verschließt.

Dieser Ringspalt 26 und die Leitbleche 28, die aus Metall oder Kunststoff bestehen können, werden von einem ersten Teil 27 eines Einsatzes 29 gebildet. Dieser Teil 27 besteht aus Kunststoff und weist im Anschluß an den Ringspalt eine sich verjüngende Form auf. In diesem Bereich befindet sich die Klappe 32. Das dem Gebläse 12 entfernt liegende Ende dieses Teils 27 ist mittels einer Verbindungsmuffe 31 mit einem weiteren Teil 33 des Einsatzes 29 verbunden. Die beiden Teile 27 und 33 des Einsatzes 29 bilden den Hauptluftkanal 30. Im Teil 33 ist ein Heizelement 36 zur Erwärmung des noch kalten Luftstromes angeordnet. Zur Vermeidung von temperaturbedingten Beschädigungen des Gehäuses 10 besteht dieser Teil 33 aus Metall und weist einen Abstand zur Innenwand des ihn umgebenden Gehäuses auf. Außerdem ist aus Figur 1 erkennbar, daß der Einsatz 29 das Gehäuse nach außen überragt und eine Ausströmdüse 35 aufweist.

Im trichterförmigen Bereich des Teils 27 ist eine Öffnung 38 vorgesehen, die einen Zugang zum Nebenluftkanal 34 bildet. Im Normalzustand ist diese Öffnung 38 durch die Klappe 32 verschlossen.

Die Klappe 32 ist Teil eines Winkelhebels 40, welcher auf einer Achse 42 drehbar gelagert ist. Der Winkelhebel 40 weist rechtwinklig zur Klappe 32 einen Schenkel 44 auf, der in eine Aussparung 46 eines Schiebers 48 eingreift.

Der Schieber 48 ist im Gehäuse 10 verschiebbar gelagert und wird durch eine Druckfeder 50 stets in seine Ausgangsstellung zurückgeschoben. Im Normalzustand ist der Schieber 48 in seiner Ausgangsstellung und verschließt über die Klappe 42 den Nebenluftkanal 34. Der Benutzer der Heißluftpistole kann den Schieber 48 an einem Griff 52 ergreifen und entgegen der Wirkung der Druckfeder 50 aus seiner Ausgangsstellung verschieben. Dabei wird die mit dem Schieber 48 in Wirkverbindung stehende Klappe 32 um ca. 30° bis 60°, vorzugswewise 45°, um die Achse 42 gedreht und öffnet den Nebenluftkanal 34.

Damit der Benutzer den Schieber nicht permanent gegen die Rückstellkraft der Druckfeder 50 festhalten muß, kann der Schieber 48 mittels einer an ihm angebrachten, nicht dargestellten Arretiernase in eine entsprechende Ausnehmung am Gehäuse eingerastet werden.

Der Schieber 48 mit seinem Griff 52 ist so angeordnet, daß der Benutzer den Griff 52 mit einem Finger der die Heißluftpistole haltenden Hand mühelos umfassen kann und den Schieber unter Überwindung der Federkraft der Druckfeder 50 zum hinteren Ende der Heißluftpistole ziehen kann.

Bei geöffneter Klappe 32 gelangt ein Teil des Luftstromes durch die Öffnung 38 hindurch in den Nebenluftkanal 34. Dieser Nebenluftkanal 34 ist in seinem letzten Abschnitt derart ausgebildet, daß der aus dem Nebenlauftkanal 34 abströmende Kaltluftstrom gegenüber dem aus dem Hauptluftkanal 30 ausströmenden Warmluftstrom um etwa 25° versetzt aus der Heißluftpistole ausströmt. Damit ist gewährleistet, daß sich die beiden Luftströme nicht nach Austritt aus der Heißluftpistole vermischen. Um den Kaltluftstrom bei Bedarf auf den zu bearbeitenden Gegenstand zu richten, muß der Bediener die Heißuftpistole lediglich um ca. 25° nach oben verschwenken.

Figur 2 zeigt den Schieber 48 mit der geöffneten Klappe 32 in einer vergrößerten Darstellung.

Beim Betrieb der erfindungsgemäßen Heißluftpistole wird im Normalzustand ein Warmluftstrom erzeugt, der durch den Hauptluftkanal 30 aus der Heißluftpistole heraustritt. Dieser Warmluftstrom wird verwendet um den zu bearbeitenden Gegenstand, z. B. das Kunststoffrohr, zu erwärmen. Hat der zu erwärmende Rohrabschnitt des Kunststoffrohres die gewünschte Temperatur erreicht, d. h. ist der Kunststoff in einem leicht verbiegbaren Zustand, so wird das Kunststoffrohr in der gewünschten Weise verbogen. Damit der Benutzer der Heißluftpistole das Kunststoffrohr nicht so lange in der gebogenen Position halten muß bis der Kunststoff wieder erkaltet und erstarrt ist, kann er mit der erfindungsgemäßen Heißluftpistole einen Kaltluftstrom erzeugen, der die Abkühlung des Kunststoffrohres beschleunigt.

Dieser Kaltluftstrom wird dadurch ereugt, daß der Benutzer mit einem Finger der die Heißluftpistole haltenden Hand den Schieber 48 an seinem Griff 52 ergreift und unter Überwindung der Federkraft der Druckfeder 50 aus seiner Ausgangsstellung zum hinteren Ende des Gehäuses 10 hin zieht. Dabei wird die mit dem Schieber 48 in Wirkverbindung stehende Klappe 32 verschwenkt und öffnet somit den Nebenluftkanal 34, durch den nun der Kaltluftstrom heraustritt. Nachdem somit eine zusätzliche Öffnung des Luftkanales 20 vorhanden ist, ergibt sich zwangsläufig, daß der Luftmassendurchfluß durch den Hauptluftkanal 30 sinkt.

Aufgrund des nun niedrigeren Luftmassendurchflusses durch den Hauptluftkanal 30 besteht die Gefahr, daß die am Heizelement 36 bereitgestellte Wärmemenge vom verbleibenden Luftstrom nicht mehr vollständig aufgenommen werden kann. Deshalb können die Betriebsparameter der Heißluftpistole der neuen Situation angepaßt werden.

Um dies zu bewirken ist der Schieber 48 mit dem Schalter 18 gekoppelt, d.h., sobald der Schieber 48 durch den Benutzer aus seiner Ausgangsstellung heraus bewegt wird, wird gleichzeitig der Schalter 18 in die nächst höhere Leistungsstufe für das Gebläse geschaltet. Umgekehrt wird der Schalter 18 in die nächst niedrigere Förderstufe umgeschaltet, wenn der Schieber 48 in seiner Ausgangsstellung zurückgeschoben wird und die Klappe 32 den Nebenluftkanal 34 verschließt. Das Herunterschalten des Schalters 18 wird durch eine nicht dargestellte Feder unterstützt.

In einer anderen, nicht dargestellten Ausführungsform ist der Schieber 48 mit elektrischen Schaltkontakten ausgerüstet, welche bewirken, daß beim Betätigen des Schiebers 48 die Leistung des Heizelementes 36 um einen geringen Betrag reduziert oder erhöht wird, je nachdem in welche Richtung der Schieber 48 bewegt wird. Die Reduzierung der Heizleistung soll verhindern, daß im Hauptuftkanal 30 ein Wärmestau entsteht und die Erhöhung der Heizleistung nach Verschließen der Klappe 32 gewährleistet, daß der Normalzustand wieder vollständig hergestellt ist.

In einer weiteren, nicht dargestellten Ausführungsform kann sowohl der Hauptluftkanal, als auch der Nebenluftkanal mit einer Ausströmdüse versehen werden.

## Patentansprüche

1. Heißluftpistole mit einem in einem Gehäuse (10) angeordneten Gebläse (12) zur Erzeugung eines Luftstromes, mit einem zumindest einen Teil des Luftstromes aufnehmenden Hauptluftkanal (30) und mindestens einem Nebenluftkanal (34), wobei der Strömungsquerschnitt des Nebenluftkanales (34) mittels eines Verstellorgans veränderbar ist, und mit Mitteln zum Erwärmen zumindest eines Teils des Luftstromes, wobei der Nebenluftkanal (34) durch das Verstellorgan verschließbar ist, wohingegen der Strömungsquerschnitt des Hauptluftkanales (30) unveränderbar ist, und die Mittel zum Erwärmen zumindest eines Teils des Luftstromes genau ein im Hauptluftkanal (30) integriertes Heizelement (36) aufweisen, **dadurch gekennzeichnet,** daß der Hauptluftkanal (30) von einem Einsatz gebildet wird und sich unmittelbar an das Gebläse (12) anschließt, und daß der Nebenluftkanal (34) vom Gehäuse (10) gebildet wird und vom Einsatz abgezweigt ist.

2. Heißluftpistole nach Anspruch 1, dadurch gekennzeichnet, daß der Einsatz das Gehäuse (10) nach außen überragt.

3. Heißluftpistole nach Anspruch 1 oder 2, dadurch gekennzeichnet, daß der Einsatz mit einer Ausströmdüse versehen ist.

4. Heißluftpistole nach einem der vorhergehenden Ansprüche, dadurch gekennzeichnet, daß der Einsatz aus einem temperaturbeständigen Werkstoff, insbesondere Metall besteht.

5. Heißluftpistole nach einem der vorhergehenden Ansprüche, dadurch gekennzeichnet, daß der Einsatz mit Abstand zur Innenwand des Gehäuses (19) in diesem angeordnet ist.

6. Heißluftpistole nach einem der vorhergehenden Ansprüche, dadurch gekennzeichnet, daß der Einsatz zwei- oder mehrteilig ausgebildet ist.

7. Heißluftpistole nach Anspruch 6, dadurch gekennzeichnet, daß die einzelnen Teile aus unterschiedlichen Materialien bestehen.

8. Heißluftpistole nach Anspruch 6 oder 7, dadurch gekennzeichnet, daß der dem Gebläse (12) benachbarte Teil einen Abzweig für den Nebenluftkanal (34) aufweist.

9. Heißluftpistole nach einem der vorhergehenden Ansprüche, dadurch gekennzeichnet, daß der Einsatz ganz oder teilweise auswechselbar ist.

10. Heißluftpistole nach einem der vorhergehenden Ansprüche, dadurch gekennzeichnet, daß der Einsatz zumindest abschnittsweise, insbesondere im Bereich des Heizelements (36) eine Zylinderform aufweist.

11. Heißluftpistole nach einem der vorhergehenden Ansprüche, dadurch gekennzeichnet, daß der Nebenluftkanal (34) gebogen oder geknickt ist.

12. Heißluftpistole nach einem der vorhergehenden Ansprüche, dadurch gekennzeichnet, daß das Verstellorgan mit einem Betätigungselement (48) wirkverbunden ist.

13. Heißluftpistole nach einem der vorhergehenden Ansprüche, dadurch gekennzeichnet, daß der Strömungsquerschnitt des Nebenluftkanales (34) durch das Verstellorgan in mehreren Stufen einstellbar ist, wobei das Verstellorgan durch Verrastmittel feststellbar ist.

14. Heißluftpistole nach wenigstens einem der vorhergehenden Ansprüche, dadurch gekennzeichnet, daß der Nebenluftkanal (34) selbst bei vollständig geöffnetem Verstellorgan einen kleineren Strömungsquerschnitt als der Hauptluftkanal (30) aufweist.

15. Heißluftpistole nach wenigstens einem der vorhergehenden Ansprüche, dadurch gekennzeichnet, daß das Verstellorgan eine verschwenkbare Klappe (32) ist

16. Heißluftpistole nach wenigstens einem der vorhergehenden Ansprüche, dadurch gekennzeichnet, daß der Nebenluftkanal (34) unterhalb oder oberhalb des Hauptluftkanales (30) angeordnet ist.

17. Heißluftpistole nach wenigstens einem der vorhergehenden Ansprüche, dadurch gekennzeichnet, daß der Nebenluftkanal (34) gegenüber dem Hauptluftkanal (30) derart angeordnet ist, daß der Kaltluftstrom gegenüber dem Warmluftstrom um etwa 15° bis 45°, vorzugsweise 25°, geneigt aus der Heißluftpistole heraustritt.

18. Heißluftpistole nach wenigstens einem der vorhergehenden Ansprüche, dadurch gekennzeichnet, daß der Nebenluftkanal (34) im Normalzustand durch das Verstellorgan verschlossen ist.

19. Heißluftpistole nach wenigstens einem der vorhergehenden Ansprüche, dadurch gekennzeichnet, daß die Leistung des Gebläses (12) und/oder des Heizelementes (36) in einem vorbestimmten Leistungsbereich variierbar ist.

20. Heißluftpistole nach wenigstens einem der vorhergehenden Ansprüche, dadurch gekennzeichnet, daß das Betätigungselement (48) die Leistung des Gebläses (12) und/oder des Heizelementes (36) der momentanen Stellung des Verstellorgans anpaßt.

21. Heißluftpistole nach wenigstens einem der vorhergehenden Ansprüche, dadurch gekennzeichnet, daß das Betätigungselement (48) derart mit dem Gebläse (12) verbunden ist, daß das Betätigungselement (48) beim Öffnen des Nebenluftkanales (34) die Leistung des Gebläses (12) erhöht und beim Schließen des Nebenluftkanales (34) die Leistung des Gebläses (12) senkt.

22. Heißluftpistole nach wenigstens einem der vorhergehenden Ansprüche, dadurch gekennzeichnet, daß das Betätigungselement (48) derart mit dem Heizelement (36) verbunden ist, daß das Betätigungselement (48) beim Öffnen des Nebenluftkanales (34) die Leistung des Heizelementes (36) um einen geringen Betrag senkt und beim Schließen des Nebenluftkanales (34) die Leistung des Heizelementes (36) um eingen geringen Betrag erhöht.

23. Heißluftpistole nach wenigstens einem der vorhergehenden Ansprüche, dadurch gekennzeichnet, daß das Betätigungselement (48) federbelastet ist.

24. Heißluftpistole nach wenigstens einem der vorhergehenden Ansprüche, dadurch gekennzeichnet, daß das Betätigungselement (48) als ein mit einem Griff (52) versehener Schieber (48) ausgeführt ist.

25. Heißluftpistole nach Anspruch 24, dadurch gekennzeichnet, daß der Schieber (48) in seinem ausgelenkten Zustand mittels einer Arretiernase arretierbar ist.

26. Heißluftpistole nach wenigstens einem der vorhergehenden Ansprüche, dadurch gekennzeichnet, daß das Betätigungselement (48) mit einem mehrstufigen Schalter (18) wirkverbunden ist.

27. Heißluftpistole nach Anspruch 26, dadurch gekennzeichnet, daß der Schalter (18) federbelastet ist.

28. Heißluftpistole nach wenigstens einem der vorhergehenden Ansprüche, dadurch gekennzeichnet, daß das Betätigungselement (48) mit Schaltkontakten ausgerüstet ist, über die die Leistung des Heizelementes (36) steuerbar ist.
